# EUROPÄISCHE PATENTSCHRIFT

(11) **EP 1 429 941 B1**
(45) Veröffentlichungstag und Bekanntmachung des Hinweises auf die Patenterteilung: **03.05.2006**
(21) Anmeldenummer: 02774627.0
(22) Anmeldetag: 19.09.2002
(51) Int. Cl.: B60R 13/02

(54) **VERKLEIDUNGSELEMENT FÜR DAS DACH EINES FAHRZEUGINNENRAUMS**
PANELING ELEMENT FOR THE ROOF OF A VEHICLE INTERIOR
ELEMENT D'HABILLAGE CON U POUR LE TOIT DE L'HABITABLE D'UN VEHICULE

(30) Priorität: 21.09.2001 DE 10146694
(43) Veröffentlichungstag der Anmeldung: 23.06.2004
(73) Patentinhaber: Johnson Controls GmbH, 51399 Burscheid (DE)
(72) Erfinder: CZINKI, Alexander, 53111 Bonn (DE); KRETSCHMER, Jürgen, 73734 Esslingen (DE); LEENAERTS, Torsten, 42111 Wuppertal (DE); MÜLLER, Wolfgang, 42897 Remscheid (DE)
(74) Vertreter: Hemmelmann, Klaus
(86) Internationale Anmeldenummer: PCT/EP2002/010505
(87) Internationale Veröffentlichungsnummer: WO 2003/026929

(56) Entgegenhaltungen:
- EP-A- 0 203 484
- EP-A- 0 724 981
- EP-A- 0 900 699
- US-A- 5 415 554
- US-A- 6 120 091

## Beschreibung

Die Erfindung betrifft ein Verkleidungselement für das Dach eines Fahrzeuginnenraums, umfassend eine Füllungsplatte und mit dieser verbundene Trägerelemente, sowie ein Verfahren zur Herstellung eines derartigen Verkleidungselements.

Das Dokument US6120091A offenbart ein Verkleidungselement für das Dach eines Fahrzeuginnenraums nach dem Oberbegriff des Anspruchs 1.

### Stand der Technik

Aus der Patentschrift EP 0 203 484 B1 ist ein gattungsgemäßes Verkleidungselement für das Dach eines Fahrzeuginnenraums bekannt. Das Verkleidungselement besteht aus einer vorgeformten, starren Kunststoffplatte, die so ausgestaltet ist, dass sie die oberen und seitlichen Innenflächen des Daches der Fahrzeugkarosserie verdeckt. Die vordere Stirnseite der Kunststoffplatte ist mit einem sich quer erstreckenden Trägerelement für die Aufnahme der Sonnenblenden und des inneren Rückspiegels verbunden. Auf der Oberseite der Kunststoffplatte sind ferner in Längsrichtung zwei Holme angeordnet, die keine direkte Verbindung zum Trägerelement aufweisen und als Lüftungskanäle dienen. Ferner kann auf die Oberseite der Kunststoffplatte ein einstückiger Rahmen aufgesetzt werden, der zur Aufnahme eines Schiebedachs geeignet ist.

Dieses Verkleidungselement erleichtert zwar die Montage der Innenraumauskleidung, da Zubehörteile in ergonomisch günstiger Position mit dem Trägerelement vorab zu einem Modul montiert werden, das nach dem Zusammenbau zu einem kompletten Verkleidungselement in der Karosserie verankert wird. Die Flexibilität des gewählten Aufbaus im Hinblick auf unterschiedliche Karosseriebauformen oder Ausstattungsvarianten ist jedoch begrenzt, da die vorgeformte, nicht anpaßbare Kunststoffplatte das bestimmende Teil des Verkleidungselements darstellt. Die Herstellung der großflächigen, steifen Kunststoffplatte erfordert ferner den Einsatz aufwendiger und kostenintensiver Werkzeuge.

Die Druckschriften DE 198 47 495 A1 und 198 47 496 A1 betreffen Dachmodule für die A- und B-Säule von Fahrzeuginnenräumen, die als vormontierte Baugruppen Ausstattungsteile, beispielsweise Haltegriffe, Leuchten oder Sonnenblenden aufnehmen und nach dem Einsetzen des Dachhimmels im Innenraum des Fahrzeugs angebracht werden. Das gleiche Dachmodul ist dabei in unterschiedlichen Karosseriebauformen, beispielsweise Limousine oder Kombi einsetzbar, ferner können die Befestigungselemente des Dachmoduls gleichzeitig der Fixierung des Dachhimmels dienen.

Der Dachhimmel als solcher ist hingegen nicht anpaßbar, ferner ist dieses relativ große, nicht stabilisierte Bauteil aufgrund seiner räumlichen Ausdehnung in der Handhabung ungünstig.

Aus der Praxis ist ferner bekannt, ein Verkleidungselement mit einem Rahmen dadurch herzustellen, dass aus einem plattenförmigen, vorgeformten Bauteil aus einem steifen Werkstoff der Innenbereich ausgestanzt und in das verbleibende rahmenartige Segment eine leichte und verformbare Füllung eingesetzt wird.

Auch bei diesem Vorgehen ist eine Anpassung an unterschiedliche Karosseriebauformen nicht möglich, außerdem fallen erhebliche Abfallmengen an, die einer Wiederverarbeitung zugeführt oder entsorgt werden müssen.

### Aufgabe

Der Erfindung liegt die Aufgabe zugrunde, ein Verkleidungselement bereitzustellen, dass mit kostengünstigen Werkzeugen herstellbar und an die betreffende Bauform der Karosserie anpaßbar ist Ferner sollen das Recycling des Bauteils und die nachträgliche Ausrüstung des Fahrzeugs mit Zubehörteilen vereinfacht werden.

### Lösung

Die Aufgabe wird erfindungsgemäß dadurch gelöst, dass die Trägerelemente des gattungsgemäßen Verkleidungselements einen Rahmen ausbilden, welcher die Füllungsplatte zumindest U-förmig umgibt und aus mindestens zwei miteinander verbundenen Rahmensegmenten zusammengesetzt ist.

Die starren, im Vergleich zu den Abmessungen des Verkleidungselements kleinen Rahmensegmente können bei dieser Ausbildung in kostengünstigen Werkzeugen hergestellt werden. Das einbaufertige Verkleidungselement erhält seine Steifigkeit im Wesentlichen durch den aus den Rahmensegmenten zusammengefügten Rahmen, der die relativ einfach aufgebaute Füllungsplatte tragend umgibt. Die Füllungsplatte kann dabei eben oder gewölbt ausgebildet sein und den Rahmen aus ästhetischen Gründen nach dem Einbau in das Fahrzeug ganz oder teilweise verdecken. Der Dachbereich beschränkt sich dabei nicht zwingend auf die horizontal verlaufende Blechstruktur der Fahrzeugkarosserie, sondern kann auch die Säulen des Fachzeugdachs umfassen (Belt-line up).

Werden Fahrzeuge bei gleicher Karosseriebauform, jedoch in unterschiedlichen Ausstattungsvarianten gefertigt, können wesentliche Teile des Verkleidungselements beibehalten werden, während nur die von den Änderungen betroffenen Komponenten geändert werden. Soll ein Fahrzeug beispielsweise wahlweise mit einem im Dachhimmel angeordneten Seitenairbag bestellt werden, würden nur die betreffenden seitlichen Rahmensegmente des Verkleidungselements entsprechend angepasst werden, während die Füllungsplatte oder ein zwischen den A-Säulen verlaufendes Rahmensegment der Basisversion entsprechen würden.

Bei der Fertigung eines als Kombi ausgebildeten Fahrzeugs könnte hingegen der U-förmige Dachhimmelrahmen der Limousine durch Einsetzen weiterer Rahmensegmente als Schenkelverlängerung und den Einbau einer größeren Füllungsplatte verwendet werden.

Selbst die Verwendung bestimmter Baugruppen in Fahrzeugen mit unterschiedlichen Plattformen ist nach dieser Erfindung grundsätzlich denkbar (Carry-over-Prinzip).

Der Rahmen kann das Verkleidungselement in vorteilhafter Weise stützen, wenn er die Füllungsplatte vollumfänglich umgibt.

Um die Montage des Verkleidungselements zu vereinfachen, wird nach einer bevorzugten Ausführung der Erfindung vorgeschlagen, dass die Rahmensegmente in ihren Verbindungsbereichen mit Koppelungseinrichtungen für die Übertragung von elektrischem Strom, Licht- oder Lichtsignalen, mechanischen Bewegungen oder flüssigen oder gasförmigen Fluiden versehen sind. Auf diese Weise kann eine Verkabelung oder Verrohrung des Verkleidungselements nach dem Fügen des Rahmens entfallen. Dies ist insbesondere dann von Vorteil, wenn die Rahmensegmente ihrerseits vom Fahrzeuginnenraum (A-Seite) zu betätigende Bedienelemente oder auf ihrer der Fahrzeugkarosserie zugewandten Seite (B-Seite) Funktionselemente aufweisen, die in entsprechender Weise mit Energie versorgt werden müssen.

Die Bedienelemente können mit Vorteil als Folientastatur ausgebildet sein, die beispielsweise als vom Fahrzeuginnenraum durch eine flexible Folie getrennte Schalter ausgebildet sind. Selbstverständlich können hinter transparent gehaltenen Bereichen der Folie auch Kontrolteuchten oder ähnliches angeordnet werden. Ein derartiges Bauteil kann beispielsweise durch Hinterspritzen einer entsprechenden Folie mit einem steifen Kunststoff hergestellt werden.

Nach einer weiteren Ausführung der Erfindung tragen die Rahmensegmente auch weitere Zubehörteile, die gegebenenfalls vor dem Fügen zu einem Rahmen in einer ergonomisch günstigen Arbeitshaltung in den Rahmensegmenten verankert werden können. Hierzu gehören beispielsweise Sonnenblenden, Rückspiegel, Airbags oder Beleuchtungseinrichtungen. Die betreffenden Aufnahmepunkte können bereits in das Rahmensegment eingeformt werden, wodurch die Positionierung und Befestigung der Zubehörteile erheblich vereinfacht wird. Des weiteren können in die Rahmensegmente auch Einrichtungen zur Führung und Fixierung von Stromkabeln, elektrischen Leitern oder Schläuchen eingebracht werden, um deren Verlegung zu vereinfachen.

Zur Vereinfachung des Recycling werden die Rahmensegmente vorzugsweise aus dem gleichen Werkstoff gefertigt. Um im späteren Fahrbetrieb eine Geräuschbildung im Bereich der Verbindung der Rahmensegmente zu vermeiden, kann es vorteilhaft sein, in die Stoßstellen eine Trennschicht aus einem anderen Material einzubringen, welche ein Reiben der Rahmensegmente aufeinander verhindert. Bestehen die Rahmensegmente beispielsweise aus glasfaserverstärktem Polypropylen, kann eine Trennschicht aus einem thermoplastischen Elastomer in den Verbindungsbereich eingebracht werden. Die Trennschicht kann in Form einer Beschichtung unmittelbar auf die Rahmensegmente aufgebracht oder als gesondertes Formteil beim Fügen des Rahmens in den Stoßbereich eingebracht werden. Im letztgenannten Fall kann das Formteil nach einer weiteren Ausbildung der Erfindung auch mit Rasteinrichtungen versehen werden, mittels derer die Rahmensegmente miteinander verbunden werden. Selbstverständlich können auch Koppelungseinrichtungen für die Übertragung von Energie im Formteil vorgesehen sein, die mit entsprechenden Gegenstücken in den Rahmensegmenten kommunizieren.

Die Rahmensegmente können beispielsweise stoffschlüssig, insbesondere durch Schweißen oder Kleben miteinander verbunden werden, wodurch eine Geräuschbildung im Verbindungsbereich grundsätzlich verhindert, eine Trennung bei einer späteren Wiederverwertung jedoch erschwert wird. Eine formschlüssige Verbindung, etwa durch Verrasten oder Verschrauben, erleichtert das Recycling und ermöglicht auch den zeitweiligen Ausbau eines Rahmensegments für Instandsetzungs- oder Umrüstungsarbeiten.

Bei einer formschlüssigen Verbindung ist es ferner denkbar, bestimmte Rahmensegmente, die nur der Versteifung des Verkleidungselements zur Verbesserung der Handhabung bis zum Einbau in den Innenraum dienen, nach dessen Verankerung in der Fahrzeugkarosserie wieder zu entnehmen. Derartige Montagehilfen könnten gleichzeitig Halterungen aufweisen, die einen Anschluss an eine Einrichtung zum Einführung oder Positionieren des Verkleidungselements im Fahrzeuginnenraum ermöglichen und beispielsweise mit dem Arm eines Industrieroboters verbindbar sind.

Die Füllungsplatte kann einstückig ausgebildet sein, sich jedoch auch aus mehreren Segmenten zusammensetzen. Im eingangs genannten Beispiel könnte bei dieser Ausbildung die in der Limousine verwendbare Füllungsplatte durch Ansetzen einer plattenförmigen Verlängerung auch in der Kombiversion verwendet werden.

Dabei können die Segmente der Füllungsplatte stoff- oder formschlüssig miteinander verbunden werden und im üblicherweise quer zur Fahrtrichtung verlaufenden Stoßbereich Koppelungseinrichtungen für die Übertragung von Energie aufweisen. Letztgenannte Ausführung ist insbesondere dann von Vorteil, wenn in den Segmenten der Füllungsplatte Zubehörteile angeordnet sind, die mit Energie versorgt werden müssen.

Aus optischen Gründen kann es vorteilhaft sein, die Segmente der Füllungsplatte jeweils vollumfänglich mit dem Rahmen zu umgeben, der in diesem Fall entsprechende Quer- oder Längsholme aufweist. Bei Bedarf können einzelne Felder des Rahmens sogar ohne Füllung ausgebildet werden, um beispielsweise den Zugang zu einem Schiebedach zu ermöglichen.

Nach einer anderen Ausführung der Erfindung ist vorgesehen, die Segmente der Füllungsplatte gegeneinander verschieblich anzuordnen. Auf diese Weise kann zum Beispiel ein im Fahrzeugdach befindliches Glasdach wahlweise freigelegt oder abgeschattet werden.

Auch die Befestigung der Füllungsplatte im Rahmen kann grundsätzlich stoff- oder formschlüssig erfolgen. Ein Formschluss kann dabei nicht nur durch Verrasten oder Verschrauben, sondem beispielsweise auch durch das Einlegen der Füllungsplatte in Nuten des Rahmens erfolgen. Dabei ist ebenfalls die Energieübertragung vom Rahmen in die Füllungsplatte von Vorteil, falls diese mit entsprechenden Verbrauchern ausgerüstet ist.

Nach einer weiteren Ausführung der Erfindung ist vorgesehen, dass in den Rahmen - auch nach dem Einbau des Verkleidungselements in das Fahrzeug - ein die Füllungsplatte rauminnenseitig überspannendes Quer- oder Längsträgerelement einbringbar ist. Dieses könnte beispielsweise zwischen den B-Säulen des Fahrzeugs verlaufen und mit Bildschirmen für die rückwärtigen Fahrgäste versehen sein. Mit diesem Zubehör könnte ein Fahrzeug somit auch nachträglich ausgerüstet werden, wobei die Einrichtungen zur Befestigung des Quer- oder Längsträgerelements sowie Koppelungseinrichtungen für die Energieversorgung bereits bei der Fertigung des Verkleidungselements im Rahmen vorhanden sind.

Nach einer besonderen Ausbildung der Erfindung sind die Rahmensegmente ferner mit Einrichtungen zur Absorption kinetischer Energie, insbesondere mit Verrippungen, Wabenstrukturen oder Einlagen aus Schaumwerkstoffen, beispielsweise geschäumtem Aluminium versehen.

Die Herstellung eines Verkleidungselements für das Dach eines Fahrzeuginnenraums aus Trägerelementen und einer Füllungsplatte kann durch die gesonderte Fertigung der Füllungsplatte sowie der als Trägerelemente dienenden Rahmensegmente erfolgen, in welche nachfolgend einige oder alle Bedien- und Funktionselemente sowie Koppelungseinrichtungen eingebaut werden. Anschließend werden die Rahmensegmente und die Füllungsplatte zu einem Verkleidungselement mit einem die Füllungsplatte zumindest U-förmig umgebenden Rahmen gefügt, das anschließend in die Fahrzeugkarosserie eingebaut wird. Rahmensegmente und Füllungsplatte können infolge dieses Vorgehens aus gänzlich verschiedenen Werkstoffen und mit unterschiedlichen Fertigungsverfahren hergestellt werden. So ist es denkbar, die Rahmensegmente mit Hilfe relativ kleiner Werkzeuge als Bauteile mit einer komplexen Gestalt aus einem steifen Werkstoff durch Spritzgießen zu fertigen, die großflächige, in sich wenig steife Füllungsplatte hingegen durch Ausschneiden aus einem kostengünstigen Halbzeug.

Bei der Herstellung des Verkleidungselements werden die Rahmensegmente nach einer Ausführung der Erfindung bereits vor dem Einbringen der Füllungsplatte zu einem Rahmen gefügt. Alternativ können die Rahmensegmente in einer Montageposition untereinander in Eingriff gebracht werden und nachfolgend in eine den Rahmen ausbildende Endposition geschwenkt werden, in der sie anschließend gesichert werden. Bei dieser Schwenkbewegung kann die Füllungsplatte in entsprechende Nuten der Rahmensegmente eingelegt und von diesen bei Erreichen der Endposition umgriffen werden. Selbstverständlich ist es auch denkbar, die Füllungsplatte erst dann einzubringen, wenn die Rahmensegmente bereits zu einem Rahmen gefügt wurden.

Nach einer besonderen Ausbildung der Erfindung wird nach dem Einbau des Verkleidungselements in die Fahrzeugkarosserie zumindest ein Rahmensegment, dass nur als Montagehilfe fungiert, wieder vom Verkleidungselement getrennt.

### Figuren

Die Figuren stellen beispielhaft und schematisch verschiedene Ausführungen der Erfindung dar.

Es zeigen:
- Fig. 1: eine Prinzipskizze eines erfindungsgemäßen Verkleidungselements in verschiedenen Varianten
- Fig. 2: ein anderes Verkleidungselement in unterschiedlichen Ausführungen als Prinzipskizze
- Fig. 3: das Verkleidungselement nach Fig. 1a in verschiedenen Stadien von Fertigung und Einbau
- Fig. 4: eine erfindungsgemäß ausgestaltete Verbindungsstelle zwischen zwei Rahmensegmenten
- Fig. 5: eine Verbindungsstelle unter Verwendung einer Trennschicht in Form eines Formteils
- Fig. 6: eine winklige Verbindung zwischen Rahmensegmenten zur Durchführung des Verfahrens nach Anspruch 32
- Fig. 7: eine Stoßverbindung zwischen den Segmenten einer mehrstückigen Füllungsplatte
- Fig. 8: eine Verbindung zwischen den Segmenten einer Füllungsplatte und einem Querholm des Rahmens
- Fig. 9: eine erste Verbindung zwischen der Füllungsplatte und einem Rahmensegment
- Fig. 10: eine weitere Verbindung der Füllungsplatte mit dem Rahmen
- Fig. 11: eine Befestigung des Verkleidungselements an der Fahrzeugkarosserie

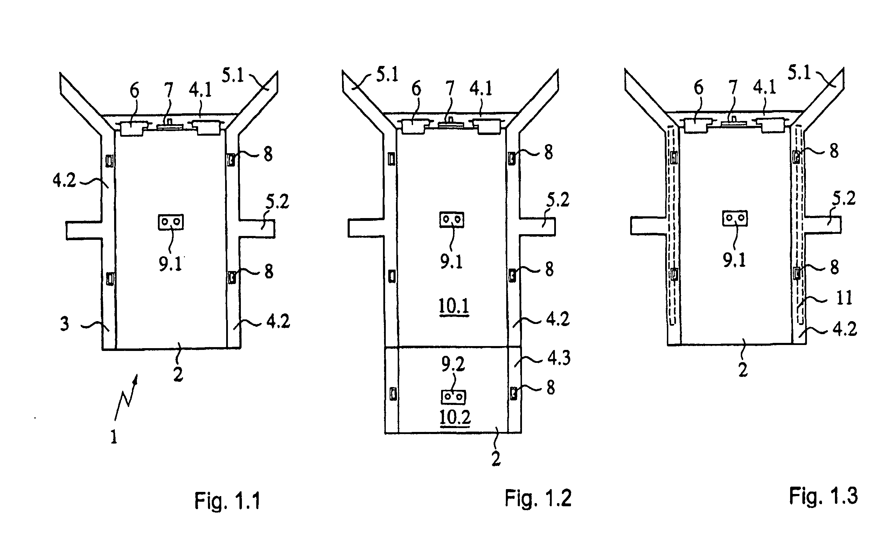

Das Verkleidungselement 1 nach Fig. 1 besteht in der Ausführung für eine viertürige Limousine (Basisversion, Fig. 1.1) aus einer Füllungsplatte 2, die von einem U-förmigen Rahmen 3 umgeben ist. Dieser ist aus starr miteinander verbundenen Rahmensegmenten 4 zusammengesetzt, von denen ein Rahmensegment 4.1 quer zur Fahrzeuglängsachse ausgerichtet und zwischen den A-Säulen angeordnet ist, während sich die Schenkel des U-förmigen Rahmens 3 bildenden seitlichen Rahmensegmente 4.2 in Fahrtrichtung erstrecken und im Bereich der A- und B-Säule jeweils nach unten gerichtete Vorsprünge 5.1 und 5.2 aufweisen. Die Rahmensegmente 4 bilden die steife, tragende Struktur des Verkleidungselements 1 aus, während die relativ weiche Füllungsplatte 2 beispielsweise die akustischen Eigenschaften des Verkleidungselements massgeblich bestimmt.

Das quer verlaufende Rahmensegment 4.1 ist mit Zubehörteilen in Form von Sonnenblenden 6 und einem inneren Rückspiegel 7 versehen, während die seitlichen Rahmensegmente 4.2 mit Handgriffen 8 ausgerüstet sind. Die Füllungsplatte 2 weist eine Beleuchtungskonsole 9.1 auf.

Wird ein Verkleidungselement 1 für einen Kombi der gleichen Baureihe angefragt (Fig. 1.2), können alle Komponenten der Basisversion erneut verwendet werden. Den vergrößerten Abmessungen des Fahrzeuginnenraums wird dadurch Rechnung getragen, dass die seitlichen Rahmensegmente 4.2 durch Rahmensegmente 4.3 in Fahrzeuglängsrichtung verlängert werden, die ihrerseits mit Handgriffen 8 für die Insassen einer dritten Sitzreihe ausgerüstet sind. Die Füllungsplatte 2 setzt sich in diesem Fall aus einem ersten Segment 10.1, das bereits in der Basisversion verwendet wird, und einem verlängernden zweiten Segment 10.2 zusammen, das eine weitere Beleuchtungskonsole 9.2 aufweist.

Wird hingegen eine Limousine mit Seitenairbag 11 gefertigt (Fig. 1.3), sind gegenüber der Basisversion nur die seitlichen Rahmensegmente 4.2 gegen solche auszutauschen, in denen die betreffende Sicherheitseinrichtung enthalten ist, während das Rahmensegment 4.1 und die Füllungsplatte 2 mit der Basisversion identisch sind. Der Lieferant des Verkleidungselements 1 kann daher innerhalb kürzester Zeit auf Anfragen des Fahrzeugherstellers reagieren und ein angepasstes Verkleidungselement bereitstellen. Entsprechende Anpassungen sind selbstverständlich auch im Hinblick auf Farbvarianten oder unterschiedliche Verkleidungsmaterialien möglich.

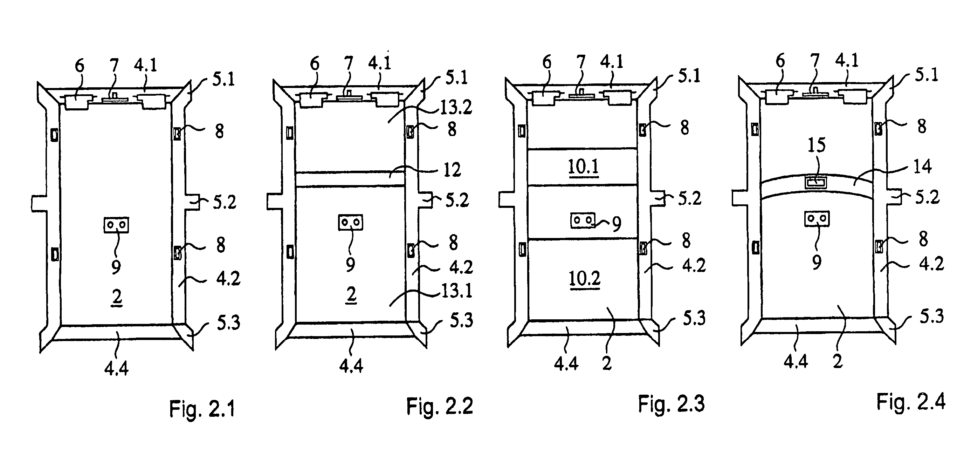

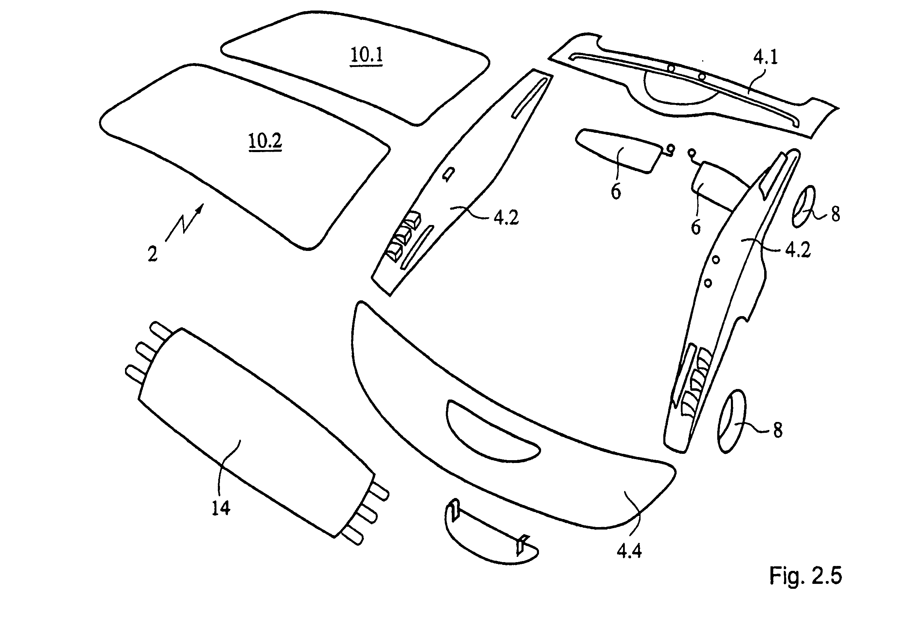

Bei der Ausführung nach Fig. 2.1 sind neben den Vorsprüngen 5.1 und 5.2 für die A- bzw. B-Säule auch Vorsprünge 5.3 für die Verkleidung der C-Säule an die seitlichen Rahmensegmente 4.2 angeformt. Darüber hinaus umgibt der Rahmen 3 die Füllungsplatte 2 durch den Anschluss eines weiteren quer verlaufenden hinteren Rahmensegments 4.4 vollumfänglich, wodurch ein besonders formstabiles Bauteil entsteht. Wird ein Fahrzeug gleicher Karosseriebauform mit einem Glasdach bestellt, kann der im Wesentlichen rechteckig ausgebildete Rahmen nach Fig. 2.1 mit einem zusätzlichen Querholm 12 versehen werden (Fig. 2.2). Das durch den Querholm 12, die seitlichen Rahmensegmente 4.2 und das hintere Rahmensegment 4.4 gebildete Feld 13.1 nimmt in diesem Fall eine verkleinerte, vollumfänglich vom Rahmen umgebene Füllungsplatte 2 auf, während das vordere Feld 13.2 nicht verdeckt wird und Blick oder Zugriff auf das Glasdach ermöglicht. Alternativ kann die Füllungsplatte aus zwei Segmenten 10.1 und 10.2 aufgebaut werden, von denen das vordere Segment 10.1 in einem Spalt zwischen dem hinteren Segment 10.2 und der Metallstruktur des Fahrzeugdachs verschieblich ist (Fig. 2.3). Die hierzu erforderlichen Führungsschienen können beispielsweise in den seitlichen Rahmensegmenten 4.2 angeformt und in der Basisversion von der den gesamten Rahmen 3 einstückig füllenden Füllungsplatte 2 verdeckt werden. Es ist jedoch auch denkbar, diese Schienen als gesonderte Bauteile nur dann auf den seitlichen Rahmensegmenten 4.2 anzubringen, wenn eine entsprechende Variante bestellt wird.

Soll ein in der Basisversion geliefertes Fahrzeug werkseitig oder nachträglich mit einer verbesserten Ausstattung versehen werden, kann dies nach Fig. 2.4 durch Einsetzen eines Querträgerelements 14 zwischen die seitlichen Rahmenholme 42 geschehen, welches die Füllungsplatte rauminnenseitig überspannt und beispielsweise mit einem Display 15 ausgerüstet ist.

Fig. 2.5 zeigt die Bauteile eines erfinderisch ausgestalteten Verkleidungselements (ähnlich Fig. 2.4) in perspektivischer Darstellung.

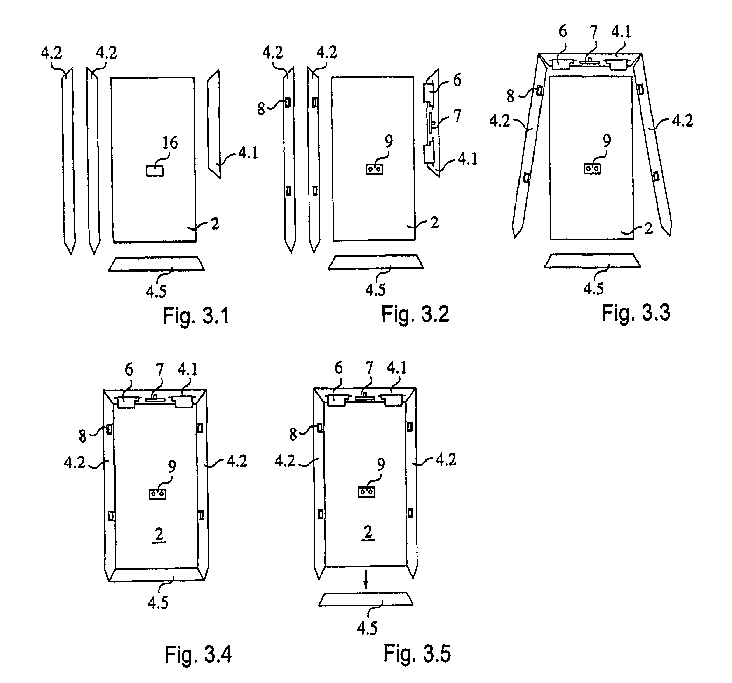

In Fig. 3 werden die Verfahrensschritte bei der Fertigung und dem Einbau des in Fig. 1.1 gezeigten Verkleidungselements 1 beispielhaft dargestellt. Der Prozess beginnt (Fig. 3.1) mit der Herstellung der einzelnen Rahmensegmente 4.1 und 4.2, die aufgrund ihrer komplexen Geometrie bevorzugt durch Spritzgießen eines Kunststoffs gefertigt werden. Selbstverständlich sind auch andere Fertigungsverfahren anwendbar, so beispielsweise das Pressen oder das Blasformen. Unabhängig hiervon wird die Füllungsplatte aus einem Halbzeug geschnitten und mit Ausnehmungen 16 für die spätere Aufnahme von Zubehörteilen versehen.

Ferner wird ein zusätzliches Rahmensegment 4.5 bereitgestellt, dessen Verwendung später erläutert wird.

Nachfolgend (Fig. 3.2) werden die Rahmensegmente 4 sowie die Füllungsplatte 2 mit den in der betreffenden Ausstattungsvariante des Fahrzeugs vorgesehenen Zubehörteilen versehen, nämlich mit den Sonnenblenden 6, dem Rückspiegel 7, den Handgriffen 8 und der Beleuchtungskonsole 9. In nicht abschließender Aufzählung können selbstverständlich weitere Ausstattungen in die Rahmensegmente integriert werden, beispielsweise Leselampen, Belüftungen, Ablagefächer, Anzeigen für Uhrzeit oder Temperatur, Steckdosen sowie Einrichtungen zur Femkommunikation mit Torantrieben. Sollte im hinteren Bereich des Rahmens 3 (abweichend von diesem Ausführungsbeispiel) ein quer verlaufendes Rahmensegment dauerhaft angeordnet sein, könnte dieses auch eine Bremsleuchte aufnehmen. Die Füllungsplatte kann neben der Beleuchtungskonsole beispielsweise auch Ausnehmungen für Schiebe- oder Glasdächer aufweisen.

Anschließend werden die Rahmensegmente 4.1 und 42 im äußeren Bereich ihrer Verbindungsstellen derart ineinander gehakt, dass sie in einer Montageposition einen U-förmigen Rahmen 2 mit aufgespreizten Schenkeln bilden, in welchen die Füllungsplatte 2 eingelegt wird (Fig. 3.3). Nachfolgend werden die Rahmensegmente in ihre Endposition geschwenkt (Fig. 3.4), wobei die seitlichen Rahmensegmente 4.2 an ihrem dem vorderen Rahmensegment 4.1 gegenüberliegenden Ende mit der Füllungsplatte 2 beispielsweise durch eine Verrastung, Verschraubung oder Verklebung verbunden werden. Zusätzlich wird in diesem Bereich das Rahmensegment 4.5 auf die Enden der seitlichen Rahmensegmente 4.2 aufgesetzt, so dass das Verkleidungselement 1 durch einen umlaufenden Rahmen für den weiteren Transport und die Ausrichtung im Fahrzeuginnenraum stabilisiert wird.

Nach dem Einbau des Verkleidungselements 1 in die Fahrzeugkarosserie kann das ausschließlich als Montagehilfe fungierende Rahmensegment 4.5 wieder gelöst und erneut verwendet werden (Fig. 3.5).

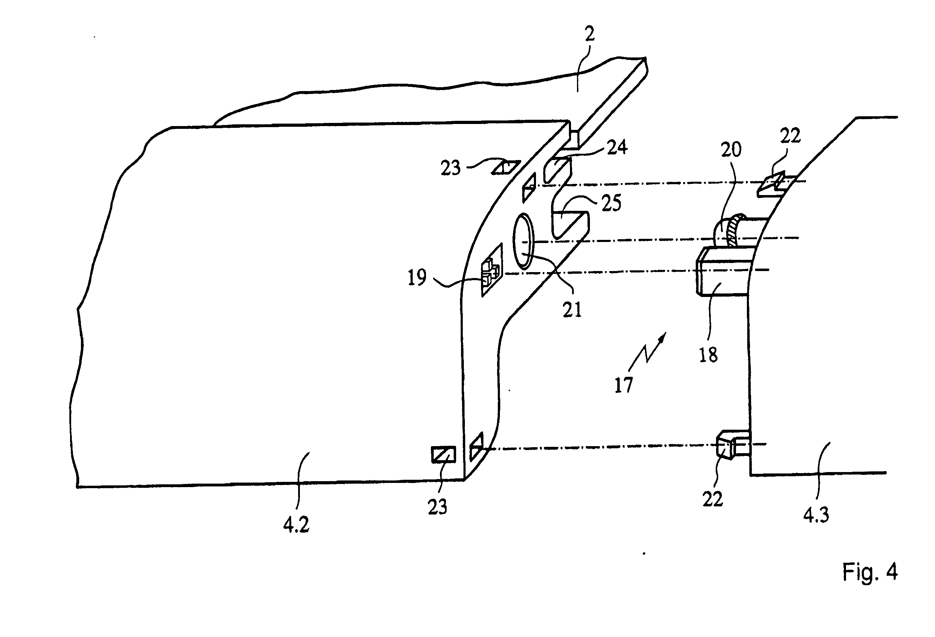

Fig. 4 zeigt die Verbindung zwischen einem ersten Rahmensegment, beispielsweise einem seitlichen Rahmensegment 4.2 mit einem koaxial verlaufenden Rahmensegment, zum Beispiel dem in Fig. 1 b dargestellten verlängemden Rahmensegment 4.3. Entsprechend können jedoch auch winklige Verbindungen zwischen Rahmensegmenten ausgebildet werden.

Die zu verbindenden Rahmensegmente 4.2 und 4.3 sind stimseitig mit Koppelungselementen 17 in Form eines elektrischen Steckers 18 mit zugeordneter Steckdose 19 und eines Stutzens 20 mit zugeordneter Einstecköffnung 21 versehen, wobei letztere beispielsweise der Zuführung von Waschwasser zu einer Heckscheiben-Wascheinrichtung oder von Frischluft in den Fahrzeuginnenraum dienen. Die Rahmensegmente 4.2 und 4.3 sind über Rastnasen 22 miteinander verbindbar, die in korrespondierende Rastöffnungen 23 eingreifen. Die Füllungsplatte 2 ist in eine sich entlang der Rahmensegmente 4.2 und 4.3 erstreckende Nut 24 einschiebbar. Unterhalb der Nut 24 verläuft in den Rahmensegmenten 4.2 und 4.3 eine weitere nutartige Ausnehmung 25, in welche beispielsweise eine nicht dargestellte Lichtleiste eingebracht werden kann.

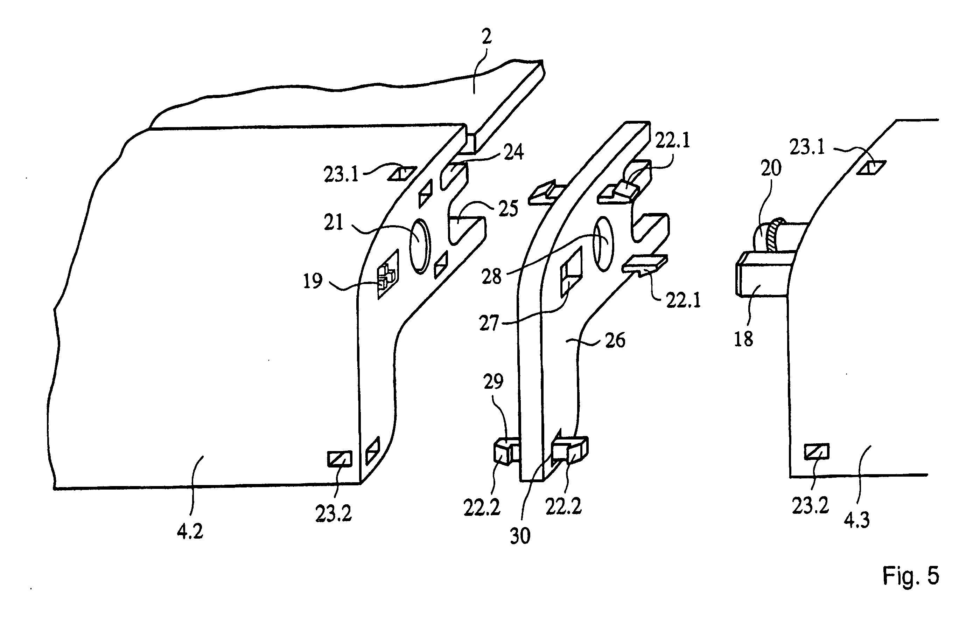

Um den direkten Kontakt zwischen den Stimflächen der Rahmensegmente 4.2 und 4.3 zu vermeiden, der im Fahrbetrieb zur Entstehung von Knarz- oder Quietschgeräuschen führen kann, sind diese in der Verbindung nach Fig. 5 durch Einlegen eines Formteils 26 aus einem anderen Werkstoff voneinander beabstandet. Das Formteil 26 ist im Bereich der Koppelungselemente 17 mit Ausnehmungen 27, 28 versehen, so dass es die Verbindung nicht unterbricht. Ferner sind an das Formteil 26 beidseitig Rastnasen 22.1 angeformt, die in entsprechende Rastöffnungen 23.1 in den Rahmensegmenten 4.2 und 4.3 eingreifen. Alternativ kann ein gesondertes Formstück 29 verbaut werden, das in spiegelbildlicher Anordnung zwei in die Rastöffnungen 23.2 einsteckbare Rastnasen 22.2 aufweist und das Formteil 26 im Bereich einer weiteren Ausnehmung 30 durchdringt.

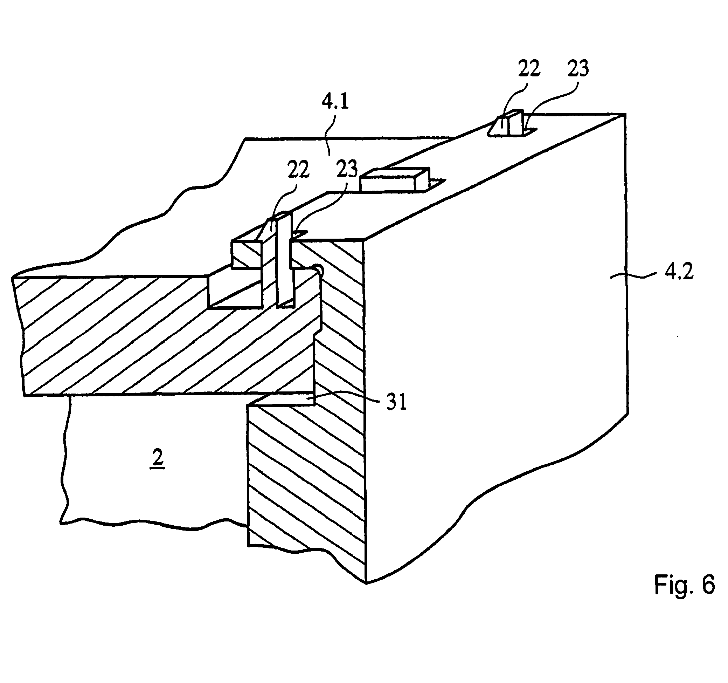

In Fig. 6 ist eine winklige Verbindung zwischen den Rahmensegmenten 4.1 und 4.2 in der Endposition dargestellt, die zur Durchführung des unter Fig. 3 beschriebenen Montageverfahrens geeignet ist. In der Montageposition wird das seitliche Rahmensegment 4.2 in einem 90° übersteigenden Winkel mit den Rastöffnungen 23 auf die an das Rahmensegment 4.1 angeformten Rastnasen 22 aufgesetzt und nachfolgend in die dargestellte Position geschwenkt, wobei die Füllungsplatte 2 umschlossen wird. Die Rastnasen 22 legen in Verbindung mit einer Hinterschneidung 31 im Rahmensegment 4.2, in welche das Rahmensegment 4.1 einschwenkt, die Endposition der Rahmensegmente 4 fest.

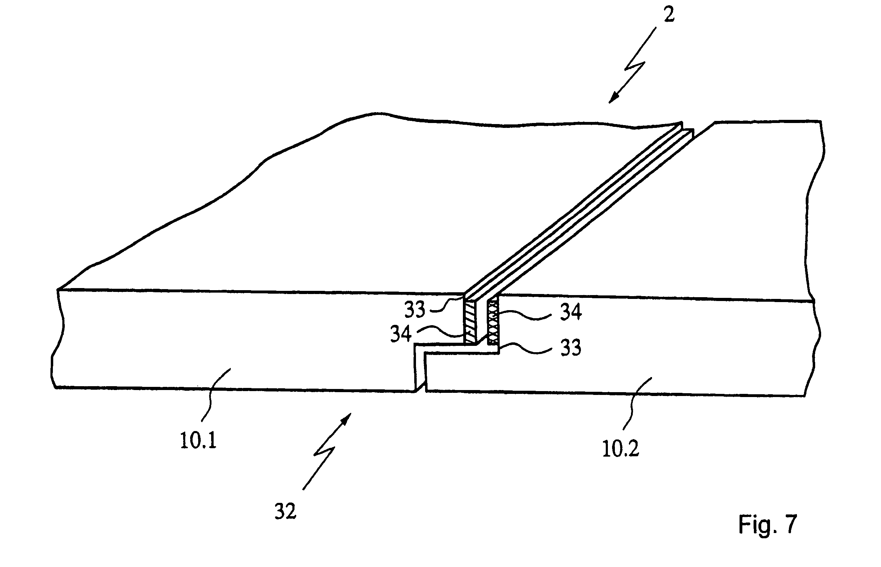

Fig. 7 zeigt die mögliche Ausbildung zwischen den Segmenten 10.1 und 10.2 einer Füllungsplatte 2. Diese ist im Stoßbereich mit einem Z-förmigen Übergang 32 versehen, wobei die der Fahrzeugkarosserie zugewandten, orthogonal zur Erstreckung der Füllplatte 2 verlaufenden Stoßflächen 33 über Klebebänder 35 miteinander verbindbar sind. Alternativ kann die Verbindung beispielsweise auch durch einen Klettverschluss erfolgen.

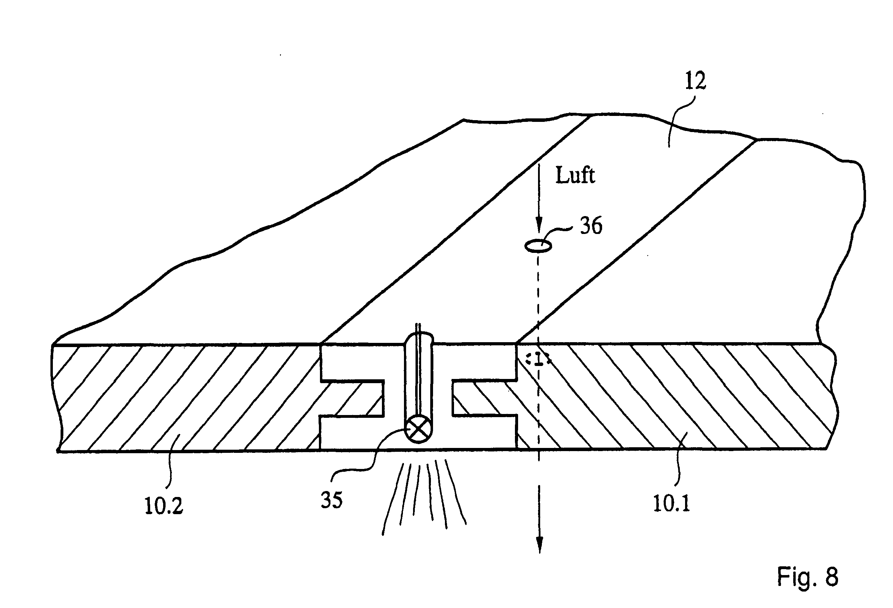

In der Ausbildung nach Fig. 8 sind die Segmente 10.1 und 10.2 formschlüssig in einen Querholm 12 des Rahmens 2 eingelassen, der zusätzliche Funktionalitäten in Form einer Lampe 35 oder einer Belüftungsöffnung 36 aufweist.

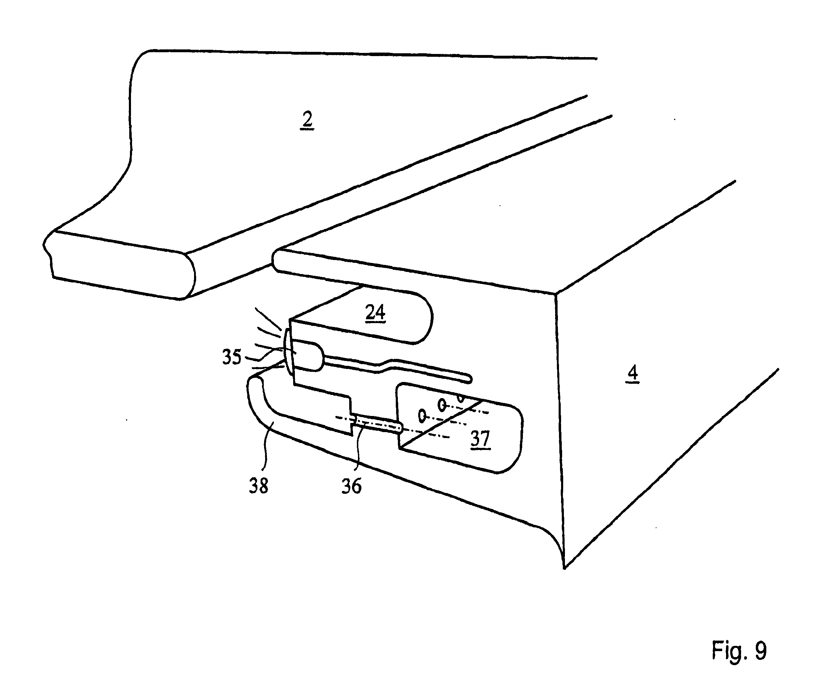

Fig. 9 stellt eine Verbindung zwischen der Füllungsplatte 2 und einem Rahmensegment 4 dar, bei welcher die Füllungsplatte 2 in eine Nut 24 des Rahmensegments 4 einschiebbar ist. Unterhalb der Nut 24 sind Lampen 35 in das Rahmensegment 4 eingelassen, das ferner noch einen im Inneren verlaufenden Lüftungskanal 37 aufweist, der über Belüftungsöffnungen 36 mit dem Fahrzeuginnenraum kommuniziert. Ein an das Rahmensegment 4 angeformter, in den Innenraum des Fahrzeugs ragender Vorsprung 38 verdeckt die Belüftungsöffnungen 36 in der Weise, dass sie für die Insassen her nicht mehr sichtbar sind.

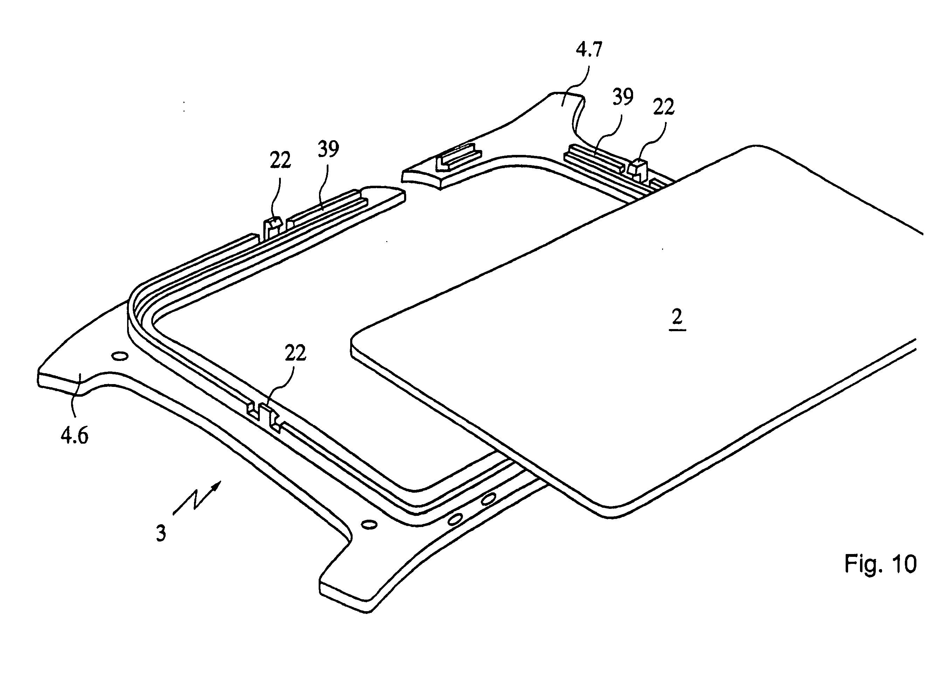

Eine andere Gestaltung der Verbindung zwischen Füllungsplatte 2 und Rahmensegment 4 zeigt Fig. 10. Der Rahmen 2 besteht aus zwei U-förmigen Rahmensegmenten 4.6 und 4.7, die zur Bildung eines rechteckigen Rahmens 2 schenkelseitig aneinandergesetzt werden. Die Rahmensegmente 4.6, 4.7 sind mit einem nach oben ragenden, im Wesentlichen umlaufenden Steg 39 versehen. Dieser weist mehrere Rastnasen 22 auf, in welche die Füllungsplatte 2 von oben eingerastet werden kann.

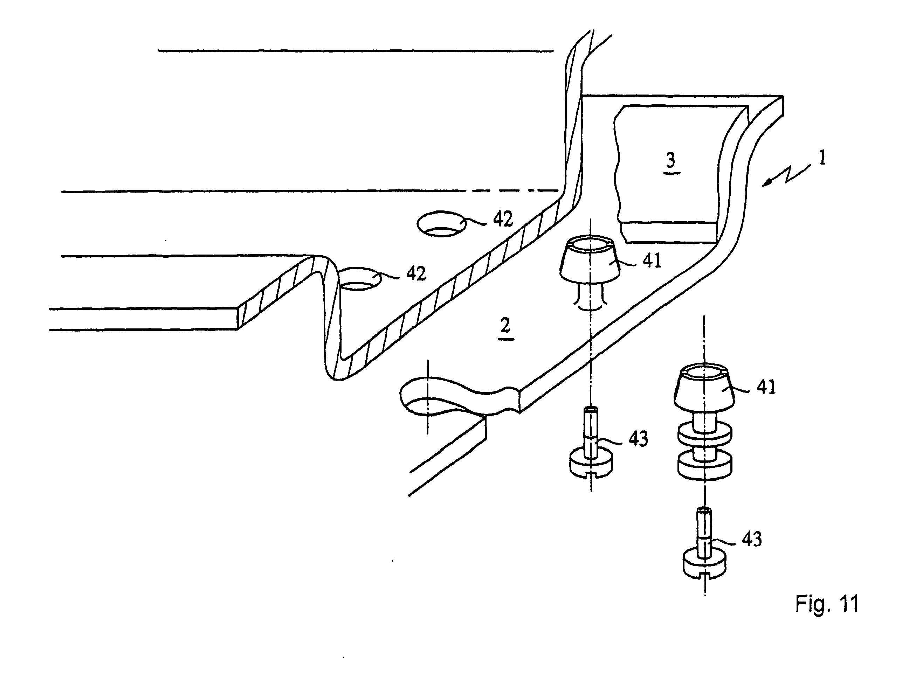

Fig. 11 stellt schließlich Verbindungselemente für die Montage des Verkleidungselements 1 in der Fahrzeugkarosserie dar. Die Füllungsplatte 2 verdeckt dabei den Rahmen 3, der einen S-förmigen Querschnitt aufweist, vollständig. Die Befestigung zwischen Verkleidungselement 1 und dem Träger 40 der Fahrzeugkarosserie erfolgt über Dübel 41, die zuerst in die Füllungsplatte 2 eingebracht oder an derselben angeformt und nachfolgend in Bohrungen 42 des Trägers 40 eingeschoben werden. Durch Einsetzen einer Schraube 43 wird der Dübel 41 endseitig gespreizt und in der Fahrzeugkarosserie verankert. Durch Lösen der Schraube 43 kann Verkleidungselement 1 wieder vom Fahrzeug gelöst werden.

### Bezugszeichen

- 1: Verkleidungselement
- 2: Füllungsplatte
- 3: Rahmen
- 4: Rahmensegment
- 5: Vorsprung
- 6: Sonnenblende
- 7: Rückspiegel
- 8: Handgriff
- 9: Beleuchtungskonsole
- 10: Segment (der Füllungsplatte)
- 11: Seitenairbag
- 12: Querholm
- 13: Feld
- 14: Querträgerelement
- 15: Display
- 16: Ausnehmung
- 17: Koppelungseinrichtung
- 18: Stecker
- 19: Steckdose
- 20: Stutzen
- 21: Einstecköffung
- 22: Rastnase
- 23: Rastöffnung
- 24: Nut
- 25: Ausnehmung
- 26: Formteil
- 27: Ausnehmung
- 28: Ausnehmung
- 29: Formstück
- 30: Ausnehmung
- 31: Hinterschneidung
- 32: Übergang
- 33: Stoßfläche
- 34: Klebeband
- 35: Lampe
- 36: Belüftungsöffnung
- 37: Lüftungskanal
- 38: Vorsprung
- 39: Steg
- 40: Träger
- 41: Dübel
- 42: Bohrung
- 43: Schraube

## Patentansprüche

1. Verkleidungselement (1) für das Dach eines Fahrzeuginnenraums, umfassend eine Füllungsplatte (2) und einen mit dieser verbundenen Trägerelemente aufweisenden Rahmen, **dadurch gekennzeichnet, dass** der Rahmen (3) die Füllungsplatte (2) zumindest U-förmig umgibt und aus mindestens zwei miteinander verbundenen Rahmensegmenten (4) zusammengesetzt ist.

2. Verkleidungselement nach Anspruch 1, **dadurch gekennzeichnet, dass** der Rahmen (3) die Füllungsplatte (2) vollumfänglich umgibt.

3. Verkleidungselement nach einem der vorhergehenden Ansprüche, **dadurch gekennzeichnet, dass** die Rahmensegmente (4) in ihren Verbindungsbereichen mit Koppelungseinrichtungen (17) für die Übertragung von elektrischem Strom, Licht- oder Lichtsignalen, mechanischen Bewegungen oder flüssigen oder gasförmigen Fluiden versehen sind.

4. Verkeldungselement nach einem der vorhergehenden Ansprüche, **dadurch gekennzeichnet, dass** in den Rahmensegmenten (4) vom Fahrzeuginnenraum her betätigbare Bedienelemente angeordnet sind.

5. Verkleidungselement nach Anspruch 4, **dadurch gekennzeichnet, dass** die Bedienelemente vom Fahrzeuginnenraum durch eine flexible Folie getrennt sind.

6. Verkleidungselement nach einem der vorhergehenden Ansprüche, **dadurch gekennzeichnet, dass** in den Rahmensegmenten (4) auf ihrer der Fahrzeugkarosserie zugewandten Seite von den Bedienelementen ansteuerbare Funktionselemente angeordnet sind.

7. Verkleidungselement nach einem der vorhergehenden Ansprüche, **dadurch gekennzeichnet, dass** in den Rahmensegmenten (4) weitere Zubehörteile, insbesondere Sonnenblenden (6), Rückspiegel (7), Seitenairbags (11) oder Lampen (35) angeordnet sind.

8. Verkleidungselement nach einem der vorhergehenden Ansprüche, **dadurch gekennzeichnet, dass** die Rahmensegmente (4) mit Einrichtungen zur Führung und Fixierung von Leitungen, insbesondere für die Leitung von Strom, Licht oder Fluiden versehen sind.

9. Verkleidungselement nach einem der vorhergehenden Ansprüche, **dadurch gekennzeichnet, dass** der Rahmen (3) im Bereich der Verbindung der Rahmensegmente (4) mit einer Trennschicht aus einem vom Werkstoff der Rahmensegmente abweichenden Material versehen ist.

10. Verkleidungselement nach Anspruch 9, **dadurch gekennzeichnet, dass** die Trennschicht als Beschichtung auf den betreffenden Bereichen der Rahmensegmente (4) ausgebildet ist.

11. Verkleidungselement nach Anspruch 9, **dadurch gekennzeichnet, dass** die Trennschicht als gesondertes Formteil (26) ausgebildet ist, dass zwischen den Rahmensegmente (4) einbaubar ist.

12. Verkleidungselement nach Anspruch 11, **dadurch gekennzeichnet, dass** das Formteil (26) mit in den Rahmensegmenten (4) verankerbaren Rastnasen (22) versehen ist.

13. Verkleidungselement nach Anspruch 11 oder 12, **dadurch gekennzeichnet, dass** das Formteil (26) mit Koppelungseinrichtungen (17) für die Übertragung von elektrischem Strom, Licht- oder Lichtsignalen oder flüssigen oder gasförmigen Fluiden versehen ist, welche mit entsprechenden Gegenstücken in den Rahmensegmenten (4) kommunizieren.

14. Verkleidungselement nach einem der Ansprüche 1 bis 8, **dadurch gekennzeichnet, dass** die Rahmensegmente (4) stoffschlüssig miteinander verbindbar sind.

15. Verkleidungselement nach einem der vorhergehenden Ansprüche, **dadurch gekennzeichnet, dass** die Rahmensegmente (4) formschlüssig miteinander verbindbar sind.

16. Verkleidungselement nach einem der vorhergehenden Ansprüche, **dadurch gekennzeichnet, dass** zumindest ein Rahmensegment (4.5) nach dem Einbau des Verkleidungselements (1) in die Fahrzeugkarosserie entfembar ist.

17. Verkleidungselement nach Anspruch 16, **dadurch gekennzeichnet, dass** das entfembare Rahmensegment (4.5) mit Halterungen für den Anschluss an eine Einrichtung zum Einführen und/oder Positionieren des Verkleidungselements (1) im Fahrzeuginnenraum, insbesondere an einen Industrieroboter versehen ist.

18. Verkleidungselement nach einem der vorhergehenden Ansprüche, **dadurch gekennzeichnet, dass** die Füllungsplatte (2) mehrstückig ausgebildet ist.

19. Verkleidungselement nach Anspruch 18, **dadurch gekennzeichnet, dass** die Segmente (10) der Füllungsplatte (2) in ihren Verbindungsbereichen mit Koppelungseinrichtungen (17) für die Übertragung von elektrischem Strom, Licht- oder Lichtsignalen, mechanischen Bewegungen oder flüssigen oder gasförmigen Fluiden versehen sind.

20. Verkleidungselement nach Anspruch 18 oder 19, **dadurch gekennzeichnet, dass** die Segmente (10) der Füllungsplatte (2) stoffschlüssig miteinander verbindbar sind.

21. Verkleidungselement nach einem der Ansprüche 18 bis 20, **dadurch gekennzeichnet, dass** die Segmente (10) der Füllungsplatte (2) formschlüssig miteinander verbindbar sind.

22. Verkleidungselement nach Anspruch 18, **dadurch gekennzeichnet, dass** die Segmente (10) der Füllungsplatte (2) jeweils vollumfänglich vom Rahmen (3) umgeben sind.

23. Verkleidungselement nach Anspruch 18, **dadurch gekennzeichnet, dass** die Segmente (10) der Füllungsplatte (2) gegeneinander beweglich, insbesondere verschieblich im Rahmen (3) angeordnet sind.

24. Verkleidungselement nach einem der vorhergehenden Ansprüche, **dadurch gekennzeichnet, dass** in der Füllungsplatte (2) weitere Zubehörteile, insbesondere Beleuchtungseinrichtungen oder Ausnehmungen für Schiebe- oder Glasdächer angeordnet sind.

25. Verkleidungselement nach einem der vorhergehenden Ansprüche, **dadurch gekennzeichnet, dass** im Verbindungsbereich zwischen Rahmen (3) und Füllungsplatte (2) Koppelungseinrichtungen (17) für die Übertragung von elektrischem Strom, Licht- oder Lichtsignalen, mechanischen Bewegungen oder flüssigen oder gasförmigen Fluiden angeordnet sind.

26. Verkleidungselement nach einem der vorhergehenden Ansprüche, **dadurch gekennzeichnet, dass** die Füllungsplatte (2) stoffschlüssig mit dem Rahmen (3) verbindbar ist.

27. Verkleidungselement nach einem der vorhergehenden Ansprüche, **dadurch gekennzeichnet, dass** die Füllungsplatte (2) formschlüssig mit dem Rahmen (3) verbindbar ist.

28. Verkleidungselement nach einem der vorhergehenden Ansprüche, **dadurch gekennzeichnet, dass** in den Rahmen (3) ein die Füllungsplatte (2) rauminnenseitig überspannendes Quer- oder Längsträgerelement (14) einbringbar ist.

29. Verkleidungselement nach einem der vorhergehenden Ansprüche, **dadurch gekennzeichnet, dass** die Rahmensegmente (4) mit Einrichtungen zur Absorption kinetischer Energie, insbesondere mit Verrippungen, Wabenstrukturen oder Einlagen aus Schaumwerkstoffen, insbesondere aus geschäumtem Aluminium versehen sind.

30. Verfahren zur Herstellung eines Verkleidungselements (1) für das Dach eines Fahrzeuginnenraums aus Trägerelementen und einer Füllungsplatte, **gekennzeichnet durch** die Schritte:
- gesondertes Fertigen der Füllungsplatte (2) und von als Trägerelemente dienenden Rahmensegmenten (4)
- Einbau einiger oder aller Bedien- oder Funktionselemente, Zubehörteile oder Koppelungseinrichtungen in die Rahmensegmente und/oder Füllungsplatte
- Fügen von Rahmensegmenten und Füllungsplatte zu einem Verkleidungselement mit einem die Füllungsplatte zumindest U-förmig umgebenden Rahmen (3)
- Komplettierung des Verkleidungselements
- Einbau des Verkleidungselements in die Fahrzeugkarosserie

31. Verfahren nach Anspruch 30, **dadurch gekennzeichnet, dass** die Rahmensegmente (4) vor dem Einbringen der Füllungsplatte (2) zu einem Rahmen (3) gefügt werden.

32. Verfahren nach Anspruch 30, **dadurch gekennzeichnet, dass** die Rahmensegmente (4) zur Verbindung untereinander zuerst in einer Montageposition miteinander in Eingriff gebracht und nachfolgend in eine den Rahmen (3) ausbildende Endposition geschwenkt und dort gesichert werden.

33. Verfahren nach Anspruch 32, **dadurch gekennzeichnet, dass** die Rahmenelemente (4) die Füllungsplatte (2) nach dem Schwenken haltend umgreifen.

34. Verfahren nach Anspruch 31 oder 32, **dadurch gekennzeichnet, dass** die Füllungsplatte (2) nach dem Fügen des Rahmens (3) in denselben eingebracht wird.

35. Verfahren nach Anspruch 30, **dadurch gekennzeichnet, dass** zumindest ein Rahmensegment (4.5) nach dem Einbau des Verkleidungselements (1) in die Fahrzeugkarosserie wieder entfernt wird.

## Claims

1. Panelling element (1) for the roof of a vehicle interior, comprising a filling panel (2) and a frame which is connected to the latter and which has support elements, **characterized in that** the frame surrounds the filling panel (2) at least in a U shape and is composed of at least two interconnected frame segments (4).

2. Panelling element according to Claim 1, **characterized in that** the frame (3) surrounds the filling panel (2) around the entire circumference.

3. Panelling element according to one of the preceding claims, **characterized in that** the frame segments (4) are provided in their connecting regions with coupling devices (17) for the transmission of electric current, light or light signals, mechanical movements or liquid or gaseous fluids.

4. Panelling element according to one of the preceding claims, **characterized in that** operating elements which can be actuated from the vehicle interior are arranged in the frame segments (4).

5. Panelling element according to Claim 4, **characterized in that** the operating elements are separated from the vehicle interior by a flexible film.

6. Panelling element according to one of the preceding claims, **characterized in that** functional elements which can be activated by the operating elements are arranged in the frame segments (4) on their side which faces the vehicle body.

7. Panelling element according to one of the preceding claims, **characterized in that** further accessory parts, in particular sun visors (6), rear view mirrors (7), side airbags (11) or lamps (35) are arranged in the frame segments (4).

8. Panelling element according to one of the preceding claims, **characterized in that** the frame segments (4) are provided with devices for guiding and fixing lines, in particular for the current, light or fluid line.

9. Panelling element according to one of the preceding claims, **characterized in that** the frame (3) is provided in the region in which the frame segments (4) are connected with a separating layer of a material differing from the material of the frame segments.

10. Panelling element according to Claim 9, **characterized in that** the separating layer is designed as a coating on the relevant regions of the frame segments (4).

11. Panelling element according to Claim 9, **characterized in that** the separating layer is designed as a separate shaped part (26) that can be fitted between the frame segments (4).

12. Panelling element according to Claim 11, **characterized in that** the shaped part (26) is provided with latching lugs (22) which can be anchored in the frame segments (4).

13. Panelling element according to Claim 11 or 12, **characterized in that** the shaped part (26) is provided with coupling devices (17) for the transmission of electric current, light or light signals or liquid or gaseous fluids, the coupling devices communicating with corresponding counterparts in the frame segments (4).

14. Panelling element according to one of Claims 1 to 8, **characterized in that** the frame segments (4) can be connected to each other with a cohesive material joint.

15. Panelling element according to one of the preceding claims, **characterized in that** the frame segments (4) can be connected to each other in a form-fitting manner.

16. Panelling element according to one of the preceding claims, **characterized in that** at least one frame segment (4.5) can be removed after the panelling element (1) has been fitted into the vehicle body.

17. Panelling element according to Claim 16, **characterized in that** the removable frame segment (4.5) is provided with securing devices for connecting it to a device for introducing and/or positioning the panelling element (1) in the vehicle interior, in particular to an industrial robot.

18. Panelling element according to one of the preceding claims, **characterized in that** the filling panel (2) is designed in a number of pieces.

19. Panelling element according to Claim 18, **characterized in that** the segments (10) of the filling panel (2) are provided in their connecting regions with coupling devices (17) for the transmission of electric current, light or light signals, mechanical movements or liquid or gaseous fluids.

20. Panelling element according to Claim 18 or 19, **characterized in that** the segments (10) of the filling panel (2) can be connected to one another with a cohesive material joint.

21. Panelling element according to one of Claims 18 to 20, **characterized in that** the segments (10) of the filling panel (2) can be connected to one another in a form-fitting manner.

22. Panelling element according to Claim 18, **characterized in that** the segments (10) of the filling panel (2) are surrounded in each case around the entire circumference by the frame (3).

23. Panelling element according to Claim 18, **characterized in that** the segments (10) of the filling panel (2) are arranged in a movable manner relative to one another, in particular are arranged displaceably in the frame (3).

24. Panelling element according to one of the preceding claims, **characterized in that** further accessory parts, in particular illuminating devices or recesses for sliding or glass roofs, are arranged in the filling panel (2).

25. Panelling element according to one of the preceding claims, **characterized in that** coupling devices (17) for the transmission of electric current, light or light signals, mechanical movements or liquid or gaseous fluids are arranged in the connecting region between the frame (3) and filling panel (2).

26. Panelling element according to one of the preceding claims, **characterized in that** the filling panel (2) can be connected to the frame (3) with a cohesive material joint.

27. Panelling element according to one of the preceding claims, **characterized in that** the filling panel (2) can be connected to the frame (3) in a form-fitting manner.

28. Panelling element according to one of the preceding claims, **characterized in that** a transverse or longitudinal support element (14) which spans the filling panel (2) on the interior side can be placed into the frame (3).

29. Panelling element according to one of the preceding claims, **characterized in that** the frame segments (4) are provided with devices for absorbing kinetic energy, in particular with ribbings, honeycomb structures or inserts of foam materials, in particular of foamed aluminium.

30. Method for producing a panelling element (1) for the roof of a vehicle interior from support elements and a filling panel, **characterized by** the following steps:
- separate manufacturing of the filling panel (2) and of frame segments (4) serving as support elements
- fitting of some or all of the operating or functional elements, accessory parts or coupling devices into the frame segments and/or filling panel
- joining frame segments and filling panel to form a panelling element with a frame (3) which surrounds the filling panel at least in a U shape
- completing the panelling element
- fitting the panelling element into the vehicle body.

31. Method according to Claim 30, **characterized in that** the frame segments (4) are joined to form a frame (3) before the filling panel (2) is placed in.

32. Method according to Claim 30, **characterized in that** the frame segments (4) are first of all brought into engagement with one another for connection to one another in one installation position and are then pivoted into a final position forming the frame (3) where they are secured.

33. Method according to Claim 32, **characterized in that**, after being pivoted, the frame elements (4) engage around the filling panel (2), holding it.

34. Method according to Claim 31 or 32, **characterized in that** the filling panel (2) is placed into the frame (3) after the latter has been joined.

35. Method according to Claim 30, **characterized in that** at least one frame segment (4.5) is removed again after the panelling element (1) has been fitted into the vehicle body.

## Revendications

1. Élément de garniture (1) pour le toit d'un habitacle de véhicule, comprenant un panneau de remplissage (2) et un cadre assemblé à ce dernier et présentant des éléments porteurs, **caractérisé en ce que** le cadre entoure le panneau de remplissage (2) au moins en forme de U et est composé d'au moins deux segments de cadre (4) mutuellement assemblés.

2. Élément de garniture selon la revendication 1, **caractérisé en ce que** le cadre (3) entoure le panneau de remplissage (2) sur tout son pourtour.

3. Élément de garniture selon l'une quelconque des revendications précédentes, **caractérisé en ce que** les segments de cadre (4) sont pourvus, dans leurs régions d'assemblage, d'organes d'accouplement (17) pour la transmission de courant électrique, de lumière ou de signaux lumineux, de mouvements mécaniques ou de fluides liquides ou gazeux.

4. Élément de garniture selon l'une quelconque des revendications précédentes, **caractérisé en ce que** des éléments de commande pouvant être actionnés depuis l'intérieur du véhicule sont disposés dans les segments de cadre (4).

5. Élément de garniture selon la revendication 4, **caractérisé en ce que** les éléments de commande sont séparés de l'intérieur du véhicule par un film souple.

6. Élément de garniture selon l'une quelconque des revendications précédentes, **caractérisé en ce que** des éléments fonctionnels pouvant être asservis par les éléments de commande sont disposés dans les segments de cadre (4) sur leur côté tourné vers la carrosserie du véhicule.

7. Élément de garniture selon l'une quelconque des revendications précédentes, **caractérisé en ce que** d'autres accessoires, notamment des pare-soleil (6), un rétroviseur (7), des airbags latéraux (11) ou des lampes (35), sont disposés dans les segments de cadre (4).

8. Élément de garniture selon l'une quelconque des revendications précédentes, **caractérisé en ce que** les segments de cadre (4) sont pourvus d'organes pour guider et fixer en position des lignes et conduites, notamment pour la conduction de courant, de lumière ou de fluides.

9. Élément de garniture selon l'une quelconque des revendications précédentes, **caractérisé en ce que** le cadre (3) est pourvu, dans la région de l'assemblage des segments de cadre (4), d'une couche séparatrice en un matériau différent du matériau des segments de cadre.

10. Élément de garniture selon la revendication 9, **caractérisé en ce que** la couche séparatrice est réalisée sous forme de revêtement sur les régions concernées des segments de cadre (4).

11. Élément de garniture selon la revendication 9, **caractérisé en ce que** la couche séparatrice est réalisée sous la forme d'une pièce façonnée distincte (26), qui peut être insérée entre les segments de cadre (4).

12. Élément de garniture selon la revendication 11, **caractérisé en ce que** la pièce façonnée (26) est pourvue d'ergots de crantage (22) pouvant être ancrés dans les segments de cadre (4).

13. Élément de garniture selon la revendication 11 ou 12, **caractérisé en ce que** la pièce façonnée (26) est pourvue d'organes d'accouplement (17) pour la transmission de courant électrique, de lumière ou de signaux lumineux, ou de fluides liquides ou gazeux, qui communiquent avec des contre-éléments correspondants dans les segments de cadre (4).

14. Élément de garniture selon l'une quelconque des revendications 1 à 8, **caractérisé en ce que** les segments de cadre (4) peuvent être mutuellement assemblés par liaison de matière.

15. Élément de garniture selon l'une quelconque des revendications précédentes, **caractérisé en ce que** les segments de cadre (4) peuvent être mutuellement assemblés par engagement positif.

16. Élément de garniture selon l'une quelconque des revendications précédentes, **caractérisé en ce qu'**au moins un segment de cadre (4.5) est amovible à la suite de l'installation de l'élément de garniture (1) dans la carrosserie du véhicule.

17. Élément de garniture selon la revendication 16, **caractérisé en ce que** le segment de cadre amovible (4.5) est pourvu d'attaches pour le raccordement à un équipement pour introduire et/ou positionner l'élément de garniture (1) dans l'habitacle du véhicule, notamment à un robot industriel.

18. Élément de garniture selon l'une quelconque des revendications précédentes, **caractérisé en ce que** le panneau de remplissage (2) est réalisé en plusieurs parties.

19. Élément de garniture selon la revendication 18, **caractérisé en ce que** les segments (10) du panneau de remplissage (2) sont pourvus, dans leurs régions d'assemblage, d'organes d'accouplement (17) pour la transmission de courant électrique, de lumière ou de signaux lumineux, de mouvements mécaniques ou de fluides liquides ou gazeux.

20. Élément de garniture selon la revendication 18 ou 19, **caractérisé en ce que** les segments (10) du panneau de remplissage (2) peuvent être mutuellement assemblés par liaison de matière.

21. Élément de garniture selon l'une quelconque des revendications 18 à 20, **caractérisé en ce que** les segments (10) du panneau de remplissage (2) peuvent être mutuellement assemblés par engagement positif.

22. Élément de garniture selon la revendication 18, **caractérisé en ce que** les segments (10) du panneau de remplissage (2) sont chacun entourés par le cadre (3) sur tout leur pourtour.

23. Élément de garniture selon la revendication 18, **caractérisé en ce que** les segments (10) du panneau de remplissage (2) sont disposés dans le cadre (3) à mobilité relative, notamment par coulissement.

24. Élément de garniture selon l'une quelconque des revendications précédentes, **caractérisé en ce que** d'autres accessoires, notamment des équipements d'éclairage ou des évidements pour des toits coulissants ou des toits vitrés, sont disposés dans le panneau de remplissage (2).

25. Élément de garniture selon l'une quelconque des revendications précédentes, **caractérisé en ce que** des organes d'accouplement (17) pour la transmission de courant électrique, de lumière ou de signaux lumineux, de mouvements mécaniques ou de fluides liquides ou gazeux sont disposés dans la région d'assemblage entre le cadre (3) et le panneau de remplissage (2).

26. Élément de garniture selon l'une quelconque des revendications précédentes, **caractérisé en ce que** le panneau de remplissage (2) peut être assemblé au cadre (3) par liaison de matière.

27. Élément de garniture selon l'une quelconque des revendications précédentes, **caractérisé en ce que** le panneau de remplissage (2) peut être assemblé au cadre (3) par engagement positif.

28. Élément de garniture selon l'une quelconque des revendications précédentes, **caractérisé en ce qu'**un élément porteur (14) transversal ou longitudinal, enjambant le panneau de remplissage (2) côté habitacle, peut être mis en place dans le cadre (3).

29. Élément de garniture selon l'une quelconque des revendications précédentes, **caractérisé en ce que** les segments de cadre (4) sont pourvus de moyens pour absorber l'énergie cinétique, notamment de nervurages, de structures alvéolaires ou d'inserts en matériaux moussés, notamment en aluminium moussé.

30. Procédé de fabrication d'un élément de garniture (1) destiné au toit d'un habitacle de véhicule et constitué d'éléments porteurs et d'un panneau de remplissage, **caractérisé par** les étapes suivantes :
- fabrication séparée du panneau de remplissage (2) et de segments de cadre (4) servant d'éléments porteurs
- mise en place dans les segments de cadre et/ou dans le panneau de remplissage d'une partie ou de la totalité des éléments de commande ou fonctionnels, accessoires ou organes d'accouplement,
- réunion des segments de cadre et du panneau de remplissage en un élément de garniture doté d'un cadre (3) entourant au moins en forme de U le panneau de remplissage
- achèvement de l'élément de garniture
- installation de l'élément de garniture dans la carrosserie du véhicule.

31. Procédé selon la revendication 30, **caractérisé en ce que** les segments de cadre (4) sont réunis en un cadre (3) avant la mise en place du panneau de remplissage (2).

32. Procédé selon la revendication 30, **caractérisé en ce que** les segments de cadre (4) sont, pour leur assemblage mutuel, d'abord amenés en engagement mutuel dans une position de montage, puis pivotés dans une position finale constituant le cadre (3), dans laquelle ils sont assujettis.

33. Procédé selon la revendication 32, **caractérisé en ce que** les segments de cadre (4), à la suite du pivotement, s'engagent autour du panneau de remplissage (2) en le maintenant.

34. Procédé selon la revendication 31 ou 32, **caractérisé en ce que** le panneau de remplissage (2) est mis en place dans le cadre (3) à la suite de la réunion de ce dernier.

35. Procédé selon la revendication 30, **caractérisé en ce qu'**au moins un segment de cadre (4.5) est retiré à la suite de l'installation de l'élément de garniture (1) dans la carrosserie du véhicule.
